# EUROPÄISCHE PATENTSCHRIFT

(11) **EP 3 078 863 B1**
(45) Veröffentlichungstag und Bekanntmachung des Hinweises auf die Patenterteilung: **23.01.2019**
(21) Anmeldenummer: 16163330.0
(22) Anmeldetag: 31.03.2016
(51) Int. Cl.: F16B 5/06, F16B 2/24

(54) **BEFESTIGUNGSANORDNUNG, INSBESONDERE FÜR DIE BEFESTIGUNG EINES KÜHLGERÄTS AN EINEM AUSSCHNITT IN EINER SCHALTSCHRANKTÜR ODER EINEM SCHALTSCHRANKSEITENTEIL**
FASTENING ASSEMBLY, ESPECIALLY FOR THE FIXING OF A COOLING APPARATUS TO A CUT-OUT IN A SWITCHGEAR CABINET DOOR OR THE SIDE OF A SWITCHGEAR CABINET
ENSEMBLE DE FIXATION, EN PARTICULIER POUR LA FIXATION D'UN APPAREIL DE REFROIDISSEMENT SUR UNE DECOUPE DANS UNE PORTE D'ARMOIRE ELECTRIQUE OU UNE PARTIE LATERALE D'ARMOIRE ELECTRIQUE

(30) Priorität: 10.04.2015 DE 102015105544
(43) Veröffentlichungstag der Anmeldung: 12.10.2016
(73) Patentinhaber: Rittal GmbH & Co. KG, 35745 Herborn (DE)
(72) Erfinder: Werb, Philipp, 35745 Herborn-Guntersdorf (DE); Immel, Manfred, 35756 Mittenaar 1 (DE)
(74) Vertreter: Angerhausen, Christoph

(56) Entgegenhaltungen:
- EP-A1- 1 050 940
- DE-A1- 3 424 290
- DE-U1- 8 113 742
- US-A1- 2011 001 026

## Beschreibung

Die Erfindung geht aus von einer Befestigungsanordnung, insbesondere für die Befestigung eines Kühlgerätes an einem Ausschnitt in einer Schaltschranktür oder einem Schaltschrankseitenteil, wobei die Befestigungsanordnung ein Flachteil mit einem Ausschnitt und einem Körper aufweist, der an seinem Umfang zumindest abschnittsweise einen Flansch aufweist, mit dem der Körper über ein elastisch komprimierbares Dichtelement im Randbereich des Ausschnitts anliegt. Dabei ist der Flansch über eine Befestigungsklammer unter Komprimierung des Dichtelements an den Randbereich gedrückt.

Derartige Befestigungsanordnungen dienen etwa zur Festlegung eines Klimageräts an einer Seitenwand oder einer Tür eines Schaltschranks derart, dass der Lufteinlass und der Luftauslass des Klimageräts in dem Ausschnitt des Flachteils liegen. Dazu kann das Kühlgerät einen umlaufenden Flansch aufweisen, an dem die Befestigungsklammer angreift, um das Klimagerät an dem Flachteil festzulegen. Für die Montage sind häufig im Randbereich des Ausschnitts in dem Flachteil Bohrungen vorgesehen, über welche mit Hilfe von Gewindebolzen die Befestigungsklammern verschraubt werden können.

Diese Befestigungsanordnungen sind jedoch vergleichsweise umständlich in der Handhabung, da einerseits sichergestellt werden muss, dass der Körper korrekt in Bezug auf den Ausschnitt ausgerichtet ist, während gleichzeitig mit einem Schraubendreher oder dergleichen die Bolzen in die Befestigungsklammer eingeschraubt werden müssen, um den Körper festzulegen.

Aus der DE 34 24 290 A1 ist eine Befestigungsanordnung in Form eines Klemmprofils mit Klammer bekannt.

Es ist daher die Aufgabe der Erfindung, eine gattungsgemäße Befestigungsanordnung derart weiterzuentwickeln, dass sie einfach in der Handhabung ist und insbesondere einen geringen Diese Aufgabe wird erfindungsgemäß durch eine Befestigungsanordnung mit den Merkmalen des Anspruchs 1 gelöst. Die abhängigen Ansprüche betreffen jeweils vorteilhafte Ausführungsformen der Erfindung.

Demgemäß weist die Befestigungsklammer der Befestigungsanordnung eine Spange auf, die an dem Flansch anliegt, sowie eine sich dazu im wesentlichen senkrecht erstreckende Stecklasche, die mit ihrem freien Ende durch einen Schlitz in dem Randbereich des Ausschnitts in dem Flachteil hindurch ragt. Dabei weist die Stecklasche mindestens einen Widerhalter auf, der gegen die von dem Flansch abgewandte Rückseite des Randbereichs drückt.

Der Widerhalter selbst kann aus einem elastisch verformbaren Material gefertigt und damit mechanisch vorspannbar sein, um eine zusätzliche Haltekraft bereitzustellen und/oder um das Einstecken der Stecklasche in den Schlitz zu erleichtern. Weiterhin kann der mindestens eine Widerhalter eine Stützkante aufweisen, über die der Widerhalter an der von dem Flansch abgewandten Rückseite des Randbereichs anliegt.

Es kann ebenfalls vorgesehen sein, dass die Stützkante unter einem ersten Abstand zu der Spange angeordnet ist, der der Summe aus einer Dicke des Flansches, einer Dicke des Flachteils im Randbereich des Ausschnitts und einer ersten Dicke des elastisch komprimierbaren Dichtelements ist, wenn sich das Dichtelement in einem ersten Kompressionszustand befindet.

Die Befestigungsklammer kann als Blechformteil ausgestaltet sein, bei dem die Spange und die Stecklasche über eine Umkantung ineinander übergehende Blechabschnitte sind, wobei der Widerhalter eine mechanisch vorspannbare Blechlasche ist, die über ein erstes Ende in einem Ausschnitt in der Stecklasche befestigt ist, und wobei das dem ersten Ende gegenüberliegende Ende die Stützkante bildet.

Dabei kann vorgesehen sein, dass die Blechlasche in einem unbelasteten Zustand aus der von der Stecklasche gebildeten Ebene herausragt und in einem vorgespannten Zustand in der von der Stecklasche gebildeten Ebene liegt, wobei die Stützkante der Blechlasche in Richtung der Umkantung zeigt, wenn sich die Blechlasche in dem vorgespannten Zustand befindet.

Zur Verwirklichung mehrerer Anpressstufen bzw. Kompressionszustände des Dichtelements kann vorgesehen sein, dass die Stecklasche mindestens einen weiteren Widerhalter mit einer weiteren Stützkante aufweist, bei der die Stützkante unter einem von dem ersten Abstand abweichenden zweiten Abstand zu der Spange angeordnet ist, der der Summe aus der Dicke des Flansches, der Dicke des Flachteils im Randbereich des Ausschnitts und einer zweiten Dicke des elastisch komprimierbaren Dichtelementes ist, wenn sich das Dichtelement in einem zweiten Kompressionszustand befindet.

Das elastisch komprimierbare Dichtelement ist auf keine bestimmten Ausführungsformen beschränkt. Es kann beispielsweise als eine Polyurethanschaumdichtung ausgebildet sein.

Es kann weiterhin vorgesehen sein, dass der Schlitz unter einem Abstand zu dem Flansch angeordnet ist und die Spange mit einem elastisch vorspannbaren Stützabschnitt den Flansch überragt und im Randbereich des Ausschnitts unter mechanischer Vorspannung abgestützt ist.

Dabei kann der Stützabschnitt unter einem Abstand zu einer Umkantung, über die die Stecklasche in die Spange übergeht, einen Abstandshalter aufweisen, der sich auf den Randbereich zu erstreckt und über den der Stützabschnitt auf dem Randbereich abgestützt ist, so dass die Stecklasche in einem vorgespannten Zustand von dem Wiederhalter in dem Schlitz gehalten ist.

Weiterhin kann die Spange einen weiteren Stützabschnitt unter einem zweiten Abstand zu der Umkantung aufweisen, wobei sich die beiden Stützabschnitte in entgegengensetzte Richtungen ausgehend von der Umkantung erstrecken, und wobei der weitere Stützabschnitt über einen weiteren Abstandshalter, der sich auf den Flansch zu erstreckt, auf dem Flansch abgestützt ist. Insbesondere kann der auf dem Flansch abgestützte weitere Abstandshalter in Richtung senkrecht zu dem weiteren Stützabschnitt eine geringere Abmessung aufweisen, als der Abstandshalter in Richtung senkrecht zu dem Stützabschnitt, um einen Dickenausgleich für den Flansch bereitzustellen.Um ein Wiederauslösen der in den Schlitz eingesteckten Befestigungsklammer zu ermöglichen, kann dem Schlitz eine Werkzeugdurchlassöffnung zugeordnet sein, über die der Wiederhalter von einer Vorderseite des Randbereichs her zugänglich ist. Die Werkzeugdurchlassöffnung kann beispielsweise in den Schlitz übergehen, so dass Werkzeugdurchlassöffnung und Schlitz einen zusammenhängenden Ausschnitt bilden.

Um das Wiederauslösen der in den Schlitz eingesteckten Befestigungsklammer weiter zu vereinfachen, kann der der Widerhalter eine über die Stützkante hinaus ragende und sich von dieser erstreckende Demontagelasche aufweisen, die in zur Einsteckrichtung der Stecklasche entgegengesetzter Richtung durch eine Demontageöffnung in dem Flachteil hindurchragt, die in den Schlitz übergeht, sodass der Widerhalter über die Demontagelasche vorgespannt werden kann. Durch die Betätigung der Demontagelasche lässt sich so die Rastverbindung zwischen Widerhalter und der vom Flansch abgewandten Rückseite des Randbereichs einfach und schnell manuell lösen. Es ist insbesondere kein Einsatz von Werkzeug notwendig.

Weiterhin bildet die Demontagelansche eine Verdrehsicherung beim Einbau der Befestigungsklammer. Durch die über die Stützkante hinausragende Demontagelasche ist ein Einrasten der Befestigungsklammer nur möglich, wenn die Demontagelasche in der Demontageöffnung Zuflucht finden kann, was bei um 180° verdrehtem Einsetzen ausgeschlossen ist.

Die beschriebene Befestigungsanordnung eignet sich insbesondere für die Befestigung eines Kühlgerätes an einem Flachteil. Der Körper der Befestigungsanordnung kann daher beispielsweise ein Wandanbaukühlgerät sein und das Flachteil ein Wandelement eines Schaltschranks oder einer Schaltschranktür.

Weitere Einzelheiten der Erfindung werden anhand der nachstehenden Figuren erläutert. Dabei zeigt:
- Figur 1: eine Ausführungsform einer Befestigungsklammer in perspektivischer Darstellung;
- Figur 2: eine perspektivische Ansicht einer Befestigungsanordnung gemäß einer Ausführungsform unter Verwendung der Befestigungsklammer gemäß Figur 1;
- Figur 3: die Befestigungsanordnung gemäß Figur 2, wobei sich die Befestigungsklammer in der Montageposition befindet;
- Figur 4: eine Rückansicht der Befestigungsanordnung gemäß den Figuren 2 und 3;
- Figur 5: eine Ausführungsform einer Befestigungsklammer mit Demontagelasche in perspektivischer Darstellung;
- Figur 6: eine perspektivische Ansicht einer Befestigungsanordnung gemäß einer Ausführungsform unter Verwendung der Befestigungsklammer mit Demontagelasche gemäß Figur 5;
- Figur 7: eine Schnittansicht der Befestigungsklammer gemäß Figur 5;
- Figur 8: eine Schnittansicht der Befestigungsklammer gemäß Figur 5 in belastetem Zustand; und
- Figur 9: eine Rückansicht der Befestigungsanordnung gemäß Figur 6

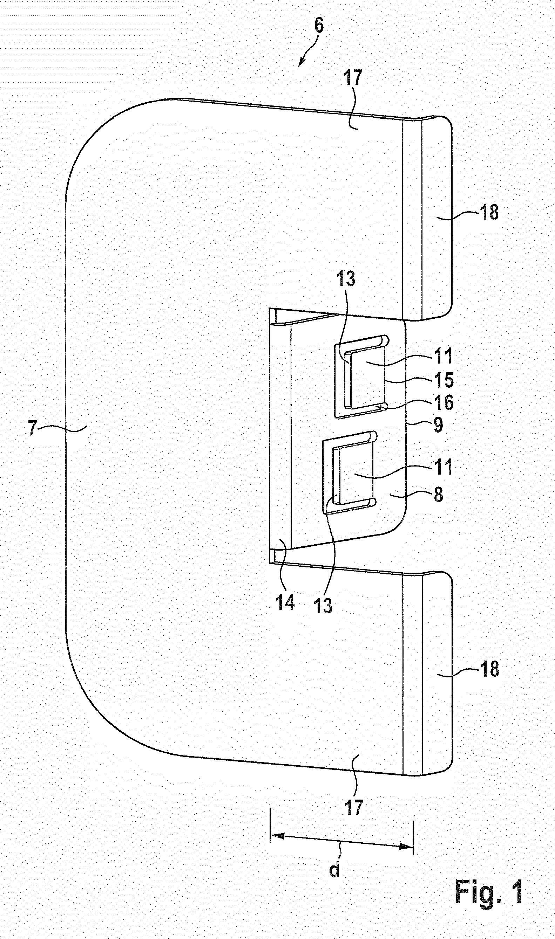

Die in Figur 1 gezeigte Befestigungsklammer 6 weist eine Spange 7 und eine von dieser über eine Umkantung 14 abgekantete Stecklasche 8 auf. Die Befestigungsklammer 6 kann als ein Blechformteil ausgebildet sein, beispielsweise als ein gestanztes und/oder gekantetes Blechformteil. Insbesondere ist bei der dargestellten Ausführungsform die Stecklasche 8 als ein abgekanteter Ausschnitt der Spange 7 im Bereich der die Spange 7 in Richtung der Abstandshalter 18 verlängernden Stützabschnitte 17. Die Abstandshalter 18 sind ebenfalls als Abkantungen von den Stützabschnitten 17 ausgebildet, wobei sich die Abstandshalter 18 parallel zu der Stecklasche 8 erstrecken. Die Umkantung, um die die Abstandshalter 18 von den Stützabschnitten 17 abgekantet sind, sind um einen Abstand d von der Umkantung 14 beabstandet, um welche die Stecklasche 8 von der Spange 7 abgekantet ist.

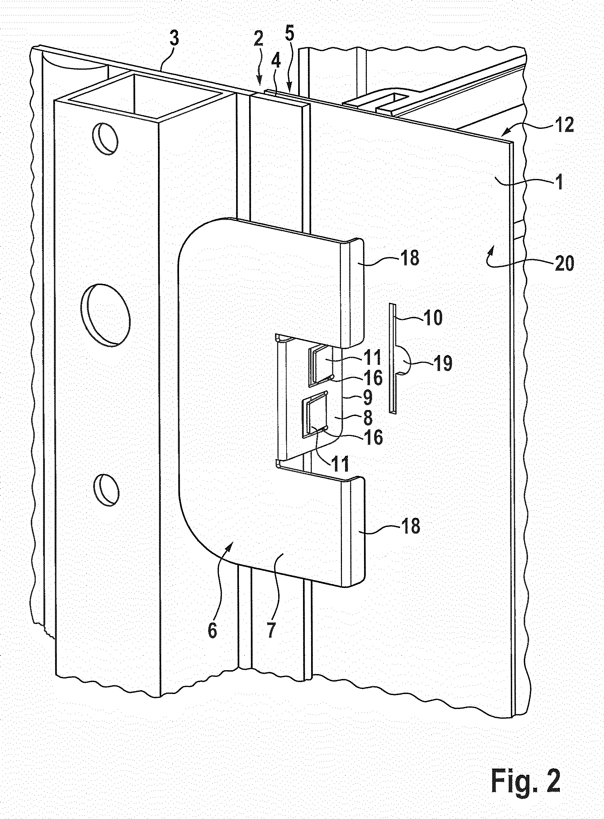

Die Stecklasche 8 weist zwei als Blechlaschen ausgebildete Widerhalter 11 auf, deren beiden Stützkanten 13 unter einem voneinander abweichenden Abstand zu der Umkantung 14 angeordnet sind. Dadurch ermöglicht es die Befestigungsklammer 6, den Flansch an dem Flachteil bei zwei unterschiedlichen Kompressionsstufen des zwischen dem Flachteil und dem Flansch angeordneten Dichtelements 5 (siehe Figur 2) festzulegen.

Die Widerhalter 11 sind als im Wesentlichen U-förmig gestanzte Ausschnitte 16 der Stecklasche 8 ausgebildet, wobei die Stützkanten 13 gerade in Richtung der Umkantung 14 zeigen, wenn die Widerhalter 11 unter Vorspannung in die Ebene der Stecklasche 8 gebracht werden, etwa wenn die Befestigungsklammer 6 über ihre Stecklasche 8 in den Schlitz 10 (siehe Figur 2) eingesteckt wird. Die Widerhalter 11 sind über ihr der Stützkante 13 gegenüberliegendes Ende 15 in dem Ausschnitt 16 befestigt. Die Stecklasche 8 weist weiterhin ein freies Ende 9 auf, über welches sie in den Schlitz 10 in dem Flachteil eingesteckt werden kann. Dieses ist in Figur 2 dargestellt.

Die Befestigungsanordnung gemäß Figur 2 zeigt einen Körper 3, der beispielsweise ein Wandanbaukühlgerät sein kann und einen umlaufenden oder zumindest abschnittsweise am Umfang des Kühlgerätes ausgebildeten Flansch 4 aufweist. Der Flansch 4 wird im Randbereich eines Ausschnitts 2 eines Flachteils 1 an dem Flachteil 1 über ein zwischen dem Flachteil 1 und dem Flansch 4 angeordnetes, elastisch komprimierbares Dichtelement 5 festgelegt, um eine geforderte IP-Schutzklasse zu erreichen.

Dazu werden, wie in Figur 2 dargestellt, der Flansch 4 und der Randbereich des Ausschnitts 2 mit dem dazwischen angeordneten Dichtelement 5 überlappend zueinander angeordnet. Daraufhin kann die Befestigungsklammer 6 über das freie Ende 9 ihrer Stecklasche 8 in den Schlitz 10 in dem Flachteil 1 eingesetzt werden. Im Zuge des Einsetzvorgangs werden die Wiederhalter 11 aus ihrer dargestellten spannungslosen Stellung in den Ausschnitt 16 vorgespannt, da die Breite des Schlitzes 10 im Wesentlichen der Dicke der Stecklasche 8 entspricht.

Im Zuge des weiteren Einsetzvorgangs werden schließlich auch die Stützabschnitte 17 über die Abstandshalter 18 auf der Vorderseite 20 des Flachteils 1 zur Anlage kommen. Ein weiteres Einschieben der Stecklasche 8 in den Schlitz 10 ist dann lediglich unter Vorspannung der Stützabschnitte 17 gegenüber der übrigen Spange möglich, wobei sich die Stützabschnitte 17 gegenüber dem restlichen Teil der Spange 7 verstellen.

Sobald einer der Widerhalter 11 vollständig durch den Schlitz 10 hindurchgetreten ist, kann er entgegen seiner Vorspannung wieder aus dem Ausschnitt 16 in der Stecklasche 8 heraustreten, um das Flachteil 1 an seiner Rückseite 12 zu hintergreifen. Über den Stützabschnitt 17 ist dann eine Vorspannung bereitgestellt, über welche das Dichtelement 5 entsprechend komprimiert wird.

Für eine noch stärkere Komprimierung des Dichtelements 5 kann die Stecklasche 8 bedarfsweise noch weiter in den Schlitz 10 eingeschoben werden, bis auch der in der Darstellung gemäß Figur 2 untere Widerhalter 11 vollständig durch den Schlitz 10 hindurchtritt und an der Rückseite 12 des Flachteils 1 das Flachteil 1 hintergreifen kann. In diesem Fall ist der Stützabschnitt 17 dann noch weiter vorgespannt und infolge dessen ebenso das Dichtelement 5, so dass sich je nachdem, welcher der beiden Widerhalter 11 an der Rückseite 12 anliegt, jeweils ein Kräftegleichgewicht zwischen der Vorspannung des Stützabschnitts 17 und der Vorspannung des Dichtelements 5 einstellt.

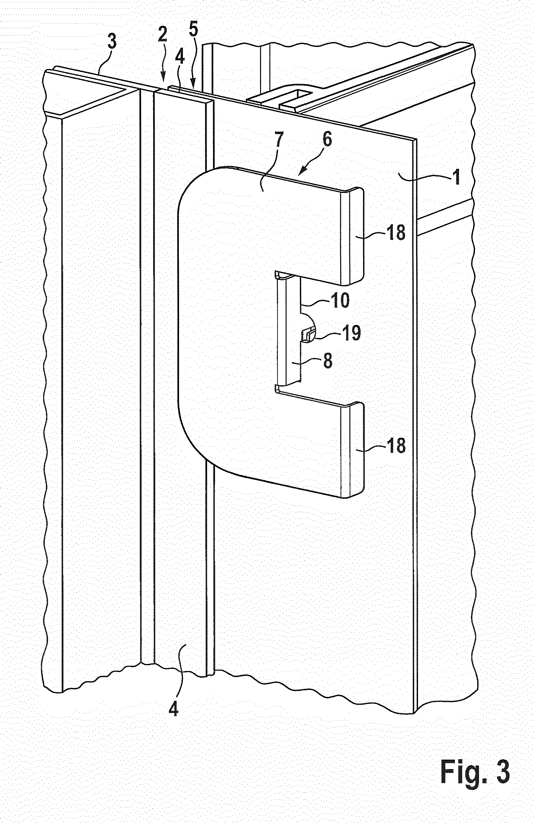

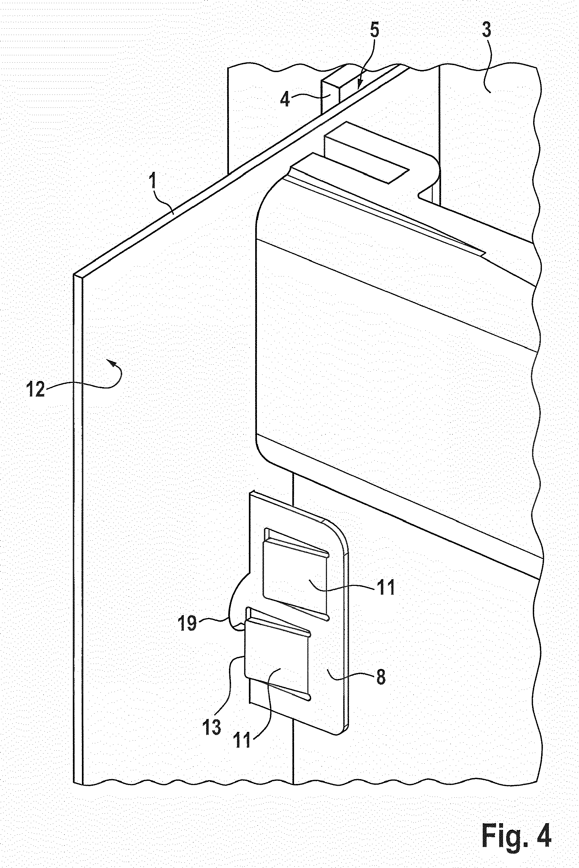

Die Figuren 3 und 4 zeigen jeweils den Zustand, wenn die Befestigungsklammer 6 vollständig, das heißt bis zum Hindurchtreten des in Einsteckrichtung zweiten, in der Darstellung unteren, Widerhalters 11 durch den Schlitz 10 hindurch, in den Schlitz eingeschoben ist. In Figur 4 ist zu erkennen, dass in diesem Fall der in der Darstellung obere Widerhalter 11 wirkungslos ist und die Stecklasche 8 lediglich über ihren in der Darstellung unteren Widerhalter 11, insbesondere dessen Stützkante 13, an der Rückseite 12 des Flachteils 1 abgestützt ist. Eine Werkzeugdurchlassöffnung 19 ist dazu vorgesehen, um von der in Figur 3 dargestellten Vorderseite des Flachteils 1 aus mit einem Werkzeug, beispielsweise einem Schlitzschraubendreher, die Stecklasche 8 auszulösen, in dem der jeweils wirksame Widerhaken in Richtung der Aufnahme 16 (vgl. Figur 2) vorgespannt wird, so dass der Widerhalter 11 durch den Schlitz 10 in dem Flachteil 1 hindurchtreten kann. Aufgrund der über die Stützabschnitte 17 bereitgestellten Vorspannkraft wird sich die Stecklasche 8 selbsttätig aus dem Schlitz 10 bewegen, sobald der jeweils wirksame Widerhalter 11 in der zuvor beschriebenen Weise vorgespannt wird.

Die gezeigte Befestigungsanordnung erlaubt es daher, dass ein Körper mit einem an seinem Umfang zumindest abschnittsweise ausgebildeten Flansch an einem Ausschnitt in einem Flachteil ohne die Verwendung von Werkzeug festgelegt werden kann. Insbesondere ist es lediglich erforderlich, den Körper, beispielsweise ein Kühlgerät, in Bezug auf den Ausschnitt in dem Flachteil, beispielsweise einem Seitenwandabschnitt oder einer Tür eines Schaltschranks, auszurichten und dann in die im Randbereich des Flachteils vorgesehenen Schlitze jeweils eine der beschriebenen Befestigungsklammern einzusetzen, bis eine gewünschte Komprimierung des Dichtelements erreicht und der entsprechende Widerhalter durch den Schlitz vollständig hindurchgetreten ist, um über seine Stützkante an der Rückseite des Flachteils zur Anlage zu kommen.

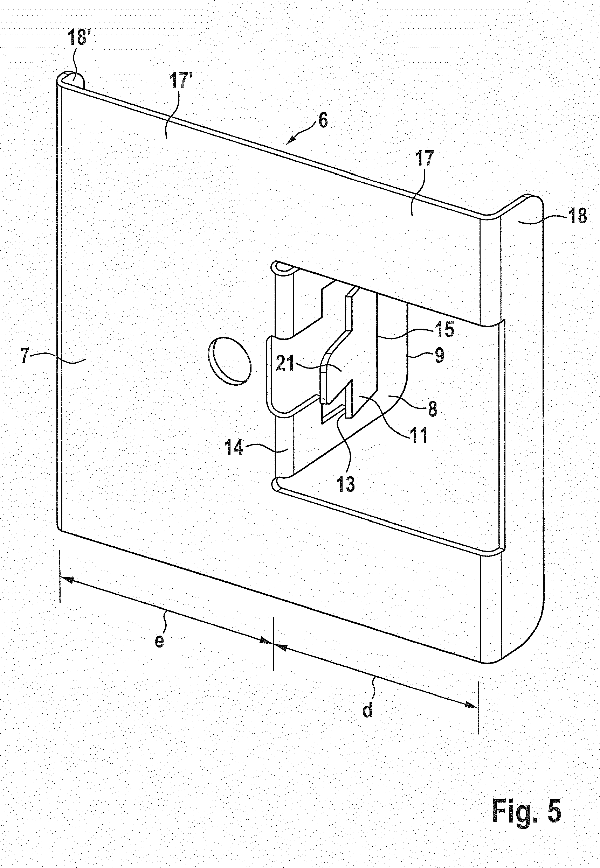

Die in Figur 5 gezeigte Befestigungsklammer 6 weist insbesondere eine die Montage als auch die Demontage der Befestigungsklammer 6 vereinfachende Demontagelasche 21 sowie einen weiteren Abstandshalter 18' auf. Der Abstandshalter 18' liegt in Relation zum Abstandshalter 18 auf der gegenüberliegenden Seite der Befestigungsklammer 6 und ist um einen Abstand e von der Umkantung 14 beabstandet. Die dargestellte Stecklasche 8 weist einen als Blechlasche ausgebildeten Widerhalter 11 auf, dessen beiden Stützkanten 13 in einem bei dieser Ausführungsform gleichen Abstand zu der Umkantung 14 angeordnet sind. Zwischen den beiden Stützkanten 13 weist der Widerhalter 11 eine Demontagelasche 21 auf, die es ermöglicht, die installierte Befestigungsklammer 6 ohne Zuhilfenahme von Werkzeug per Hand zu lösen.

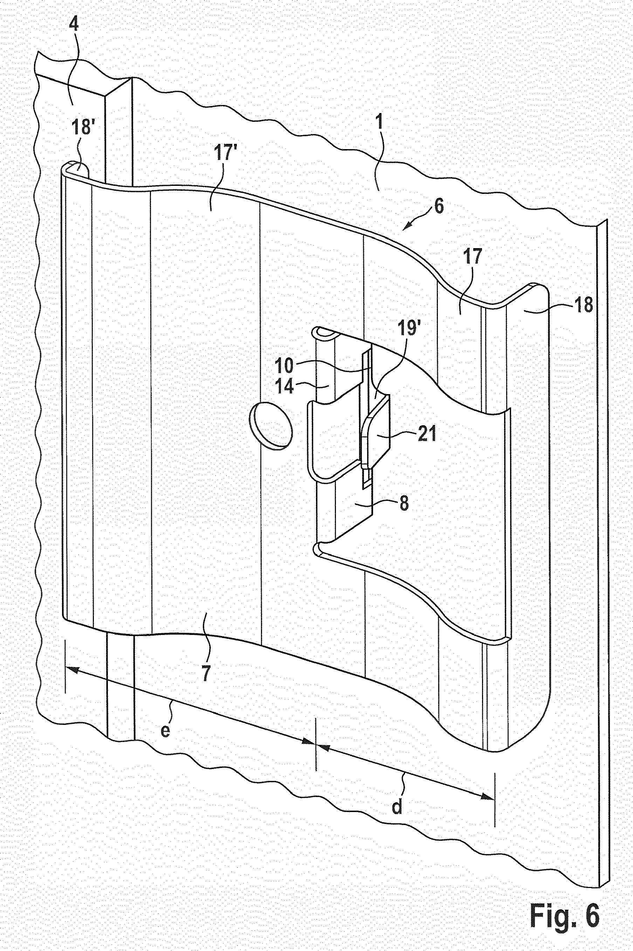

Wie Figur 6 zeigt, ist die Breite der Demontagelasche 21 gleich oder geringer als die der Demontageöffnung 19'. Sobald die Befestigungsklammer 6 mit ihrem freien Ende 9 in den Schlitz 10 des Flachteils 1 eingesetzt ist und sich die Stützkanten 13 hinter der Rückseite des Flachteils 1 befinden, rastet die Demontagelasche 21 in die an den Schlitz 10 angeformete Demontageöffnung 19' des Flachteils 1 ein, während sich gleichzeitig die Stützkanten 13 des Widerhalters 11 an der Rückseite des Flachteils 1 abstützen. Die nach dem Einsetzen der Befestigungsklammer 6 durch die Demontageöffnung 19' entgegen der Einbaurichtung ragende und manuell erreichbare Demontagelasche 21 ermöglicht den problemlosen und werkzeugfreien Ausbau der Befestigungsklammer 6 durch Vorspannen der Demontagelasche 21.

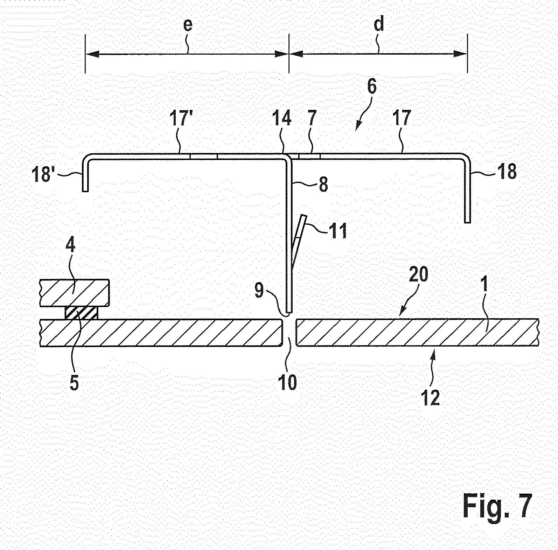

Die Figuren 6 und Figur 7 lassen erkennen, dass sich der kürzer ausgeführte Abstandshalter 18' auf dem Flansch 4 abstützt, während sich der Abstandshalter 18 auf dem Flachteil abstützt, sodass ein Dickenausgleich für die Dicke des Flansches 4 erreicht wird. Die in den Schlitz 10 eingeschobene Stecklasche 8 ragt so weit durch diese hindurch, dass die Stützkanten 13 das Flachteil 1 schnappend hintergreifen und die Demontagelasche 21 dabei in die Demontageöffnung 19' eintreten kann. Es ist erkennbar, dass die Demontagelasche 21 auch nach dem Einsetzen der Befestigungsklammer 6 von der Einbauseite her zu erreichen ist, da sie von der Rückseite des Flachteils 1 her die in Figur 6 zu sehende Vorderseite des Flachteils 1 überragt. Darüber hinaus wird durch die nur einseitig an den Schlitz 10 angeformte Demontageöffnung 19' ein Verdrehschutz für die Befestigungsklammer 6 erreicht, da sich die Befestigungsklammer 6 nur bei korrekter Ausrichtung, also mit zur Demontageöffnung 19' weisender Demontagelasche 21, in den Schlitz 10 und die Demontageöffnung 19' einsetzen lässt.

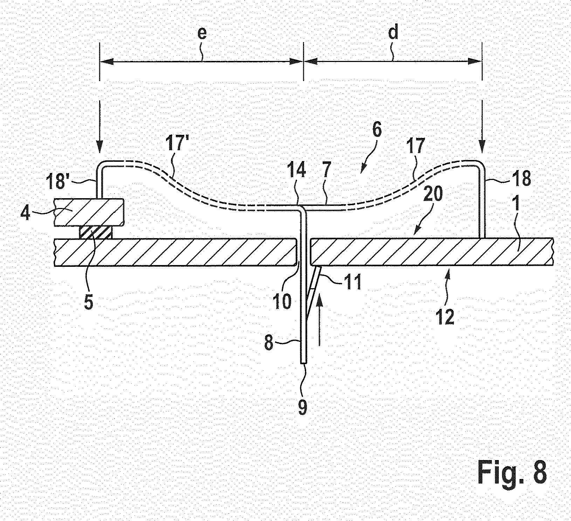

Die in Figuren 7 und 8 dargestellte Ausführungsform zeigt die Befestigungsklammer 6 in seitlicher Ansicht mit einem zum Abstützen auf dem Flansch 4 vorgesehenen Abstandshalter 18' in unbelastetem bzw. belastetem Zustand. Der weitere Stützabschnitt 17' weist hierbei unter einem Abstand e zu der Umkantung 14, über die die Stecklasche in die Spange übergeht, einen weiteren Abstandshalter 18' auf, der sich auf den Flansch 4 zu erstreckt und über den der Stützabschnitt 17' auf dem Flansch 4 abgestützt ist. Es ist zu erkennen, dass der Abstandshalter 18' in etwa um den Betrag aus der Dicke des Flanschs 4 und des komprimierten Dichtelements 5 kürzer ausgeführt ist als der gegenüber liegende Abstandshalter 18 an dem bezogen auf die Umkantung 14 gegenüber liegenden Stützabschnitt 17. Diese Ausführungsform bietet einen zusätzlichen Verdrehschutz, da bei dem Versuch, die Befestigungsklammer 6 verdreht einzubauen, der Winkel, unter dem die Stecklasche 8 in den Schlitz eingeführt würde, für einen Monteur auffallend steil wäre, so dass dieser ein verdrehtes Einsetzen der Befestigungsklammer 6 noch vor dem Einbau bemerken würde. Besonders vorteilhaft ist zudem die größere bzw. variablere Stützhöhe der Befestigungsklammer 6, bei der größere oder variablere Klemmkräfte durch den hierbei größeren beziehungsweise veränderten Federweg der Stützabschnitte 17 beziehungsweise 17' realisiert werden können. Hierbei erweist es sich ebenfalls als vorteilhaft, dass sich der Auflagepunkt des Abstandshalters 18' auf dem Flansch 4 bei einem Durchbiegen des Stützabschnitts 17', wie in Figur 8 dargestellt, nicht in Richtung der zur Stecklasche 8 weisenden Flanschkante verschiebt, wie es der Fall wäre, wenn der Stützabschnitt 17' lediglich flach auf dem Flansch 4 aufliegen würde.

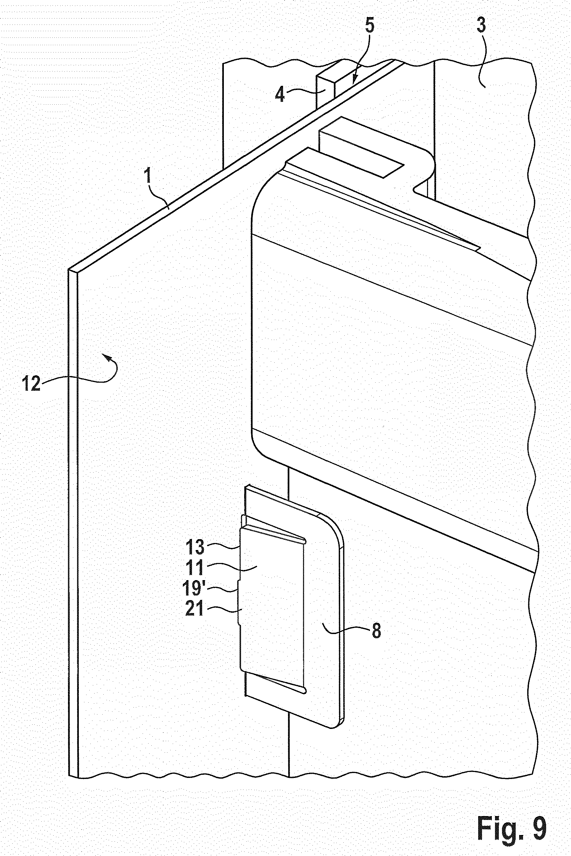

Figur 9 zeigt die Rückseite 12 des Flachteils 1 samt der eingebauten Befestigungsklammer 6 und dem fixierten Flansch 4. Dabei sind deutlich die das Flachteil 1 hintergreifenden Stützkanten 13 mit der dazwischen positionierten und in die Demontageöffnung 19' eingerastete Demontagelasche 21 zu erkennen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Flachteil
- 2: Ausschnitt
- 3: Körper
- 4: Flansch
- 5: Dichtelement
- 6: Befestigungsklammer
- 7: Spange
- 8: Stecklasche
- 9: Freies Ende
- 10: Schlitz
- 11: Widerhalter
- 12: Rückseite
- 13: Stützkante
- 14: Umkantung
- 15: erstes Ende
- 16: Ausschnitt
- 17: Stützabschnitt
- 17': weiterer Stützabschnitt
- 18: Abstandshalter
- 18': weiterer Abstandshalter
- 19: Werkzeugdurchlassöffnung
- 20: Vorderseite
- 21: Demontagelasche
- d: Abstand
- e: zweiter Abstand

## Patentansprüche

1. Befestigungsanordnung mit einem Flachteil (1), das einen Ausschnitt (2) aufweist, und mit einem Körper (3), der an seinem Umfang zumindest abschnittsweise einen Flansch (4) aufweist, mit dem der Körper (3) über ein elastisch komprimierbares Dichtelement (5) im Randbereich des Ausschnitts (2) anliegt, wobei der Flansch (4) über eine Befestigungsklammer (6) unter Komprimierung des Dichtelements (5) an den Randbereich gedrückt ist, wobei die Befestigungsklammer (6) eine Spange (7), die an dem Flansch (4) anliegt und eine sich dazu im Wesentlichen senkrecht erstreckende Stecklasche (8) aufweist, **dadurch gekennzeichnet, dass** die Stecklasche (8) mit ihrem freien Ende (9) durch einen Schlitz (10) in dem Randbereich hindurchragt, und wobei die Stecklasche (8) mindestens einen Widerhalter (11) aufweist, der gegen die von dem Flansch (4) abgewandte Rückseite (12) des Randbereichs drückt.

2. Befestigungsanordnung nach Anspruch 1, bei der der mindestens eine Wiederhalter (11) eine Stützkante (13) aufweist, über die der Wiederhalter (11) an der von dem Flansch (4) abgewandten Rückseite (12) des Randbereichs anliegt.

3. Befestigungsanordnung nach Anspruch 2, bei der die Stützkante (13) unter einem ersten Abstand zu der Spange (7) angeordnet ist, der der Summe aus einer Dicke des Flansches (4), einer Dicke des Flachteils (1) im Randbereich des Ausschnitts (2) und einer ersten Dicke des elastisch komprimierbaren Dichtelements (5) ist, wenn sich das Dichtelement (5) in einem ersten Kompressionszustand befindet.

4. Befestigungsanordnung nach Anspruch 2 oder 3, bei der die Befestigungsklammer (6) ein Blechformteil ist, bei dem die Spange (7) und die Stecklasche (8) über eine Umkantung (14) ineinander übergehende Blechabschnitte sind, wobei der Widerhalter (11) eine mechanisch vorspannbare Blechlasche ist, die über ein erstes Ende (15) in einem Ausschnitt (16) in der Stecklasche (8) befestigt ist, und wobei das dem ersten Ende (15) gegenüber liegende Ende die Stützkante (13) bildet.

5. Befestigungsanordnung nach Anspruch 4, bei der die Blechlasche in einem unbelasteten Zustand aus der von der Stecklasche (8) gebildeten Ebene herausragt und in einem vorgespannten Zustand in der von der Stecklasche (8) gebildeten Ebene liegt, wobei die Stützkante (13) der Blechlasche in Richtung der Umkantung (14) zeigt, wenn sich die Blechlasche in dem vorgespannten Zustand befindet.

6. Befestigungsanordnung nach einem der Ansprüche 3 bis 5, bei dem die Stecklasche (8) mindestens einen weiteren Widerhalter (11) mit einer weiteren Stützkante (13) aufweist, bei der die Stützkante (13) unter einem von dem ersten Abstand abweichenden zweiten Abstand zu der Spange (7) angeordnet ist, der der Summe aus der Dicke des Flansches (4), der Dicke des Flachteils (1) im Randbereich des Ausschnitts (2) und einer zweiten Dicke des elastisch komprimierbaren Dichtelements (5) ist, wenn sich das Dichtelement (5) in einem zweiten Kompressionszustand befindet.

7. Befestigungsanordnung nach einem der vorangegangenen Ansprüche, bei dem das elastisch komprimierbare Dichtelement (5) eine Polyurethanschaumdichtung ist.

8. Befestigungsanordnung nach einem der vorangegangenen Ansprüche, bei dem der Schlitz (10) unter einem Abstand zu dem Flansch (4) angeordnet ist und die Spange (7) mit einem elastisch vorspannbaren Stützabschnitt (17) den Flansch (4) überragt und auf dem Randbereich des Ausschnitts (2) unter mechanischer Vorspannung abgestützt ist.

9. Befestigungsanordnung nach Anspruch 8, bei der der Stützabschnitt (17) unter einem Abstand (d) zu einer Umkantung (14), über die die Stecklasche (8) in die Spange (7) übergeht, einen Abstandshalter (18) aufweist, der sich auf den Randbereich zu erstreckt und über den der Stützabschnitt (17) auf dem Randbereich abgestützt ist, so dass die Stecklasche (8) in einem vorgespannten Zustand von dem Widerhalter (11) in dem Schlitz (10) gehalten ist.

10. Befestigungsanordnung nach Anspruch 9, bei der die Spange (7) einen weiteren Stützabschnitt (17') unter einem zweiten Abstand (e) zu der Umkantung (14) aufweist, wobei sich die Stützabschnitte (17, 17') in entgegengensetzte Richtungen ausgehend von der Umkantung (14) erstrecken, und wobei der weitere Stützabschnitt (17') über einen weiteren Abstandshalter (18'), der sich auf den Flansch (4) zu erstreckt, auf dem Flansch (4) abgestützt ist.

11. Befestigungsanordnung nach Anspruch 10, bei der der auf dem Flansch (4) abgestützte weitere Abstandshalter (18') in Richtung senkrecht zu dem weiteren Stützabschnitt (17') eine geringere Abmessung aufweist, als der Abstandshalter (18) in Richtung senkrecht zu dem Stützabschnitt (17), um einen Dickenausgleich für den Flansch (4) bereitzustellen.

12. Befestigungsanordnung nach einem der Ansprüche 1 bis 10, bei der der Widerhalter (11) eine über die Stützkante (13) hinaus ragende und sich von dieser erstreckende Demontagelasche (21) aufweist, die in zur Einsteckrichtung der Stecklasche (8) entgegengesetzter Richtung durch eine Demontageöffnung (19') in dem Flachteil (1) hindurchragt, die in den Schlitz (10) übergeht, sodass der Widerhalter (11) über die Demontagelasche (21) vorgespannt werden kann.

13. Befestigungsanordnung nach einem der vorangegangenen Ansprüche, bei dem dem Schlitz (10) eine Werkzeugdurchlassöffnung (19) zugeordnet ist, über die der Widerhalter (11) von einer Vorderseite (20) des Randbereichs her zugänglich ist.

14. Befestigungsanordnung nach Anspruch 13, bei der die Werkzeugdurchlassöffnung (19) in den Schlitz (10) übergeht.

15. Befestigungsanordnung nach einem der vorangegangenen Ansprüche, bei der der Körper (3) ein Wandanbaukühlgerät und das Flachteil (1) ein Wandelement eines Schaltschranks oder eine Schaltschranktür ist.

## Claims

1. A fastening arrangement having a flat part (1) which comprises a cutout (2), and having a body (3) which comprises a flange (4) on its circumference at least in sections, with which the body (3) abuts the edge region of the cutout (2) via an elastically compressible sealing element (5), the flange (4) being pressed against the edge region via a fastening clamp (6) and compressing the sealing element (5), the fastening clamp (6) comprising a clip (7) which abuts the flange (4) and a plug-in tab (8) which extends essentially perpendicularly thereto, **characterized in that** the plug-in tab (8) protrudes with its free end (9) through a slot (10) in the edge region, and the plug-in tab (8) comprising at least one retainer (11) which presses against the rear side (12) of the edge region remote from the flange (4).

2. The fastening arrangement according to claim 1, wherein the at least one retainer (11) comprises a supporting edge (13) via which the retainer (11) abuts the rear side (12) of the edge region remote from the flange (4).

3. The fastening arrangement according to claim 2, wherein the supporting edge (13) is arranged at a first distance from the clip (7) which is the sum of a thickness of the flange (4), a thickness of the flat part (1) in the edge region of the cutout (2) and a first thickness of the elastically compressible sealing element (5) when the sealing element (5) is in a first compression state.

4. The fastening arrangement according to claim 2 or 3, wherein the fastening clamp (6) is a sheet-metal shaped part, in which the clip (7) and the plug-in tab (8) are sheet-metal sections which merge into one another via an edge (14), the retainer (11) being a mechanically prestressable sheet-metal tab which is fastened via a first end (15) in a cutout (16) in the plug-in tab (8), and the end opposite the first end (15) forming the supporting edge (13).

5. The fastening arrangement according to claim 4, wherein the sheet-metal tab protrudes from the plane formed by the plug-in tab (8) in an unloaded state and lies in the plane formed by the plug-in tab (8) in a prestressed state, the supporting edge (13) of the sheet-metal tab pointing in direction of the edge (14) when the metal plate is in the prestressed state.

6. The fastening arrangement according to one of the claims 3 to 5, wherein the plug-in tab (8) has at least one further retainer (11) with a further supporting edge (13), wherein the supporting edge (13) is arranged at a second distance from the clip (7), which distance deviates from the first distance and is the sum of the thickness of the flange (4), the thickness of the flat part (1) in the edge region of the cutout (2) and a second thickness of the elastically compressible sealing element (5), when the sealing element (5) is in a second compression zone.

7. The fastening arrangement according to one of the preceding claims, wherein the elastically compressible sealing element (5) is a polyurethane foam seal.

8. The fastening arrangement according to one of the preceding claims, wherein the slot (10) is arranged at a distance from the flange (4) and the clip (7) projects beyond the flange (4) with an elastically prestressable support section (17) and is supported on the edge region of the cutout (2) under mechanical prestressing.

9. The fastening arrangement according to claim 8, wherein at a distance (d) from an edge (14), over which the plug-in tab (8) merges into the clasp (7), the support section (17) has a spacer (18), which extends towards the edge region and over which the support section (17) is supported on the edge region, so that the plug-in tab (8) is held in the slot (10) in a prestressed state by the retainer(11).

10. The fastening arrangement according to claim 9, wherein the clip (7) comprises a further support section (17') at a second distance (e) from the edge (14), the support sections (17, 17') extending in opposite directions from the edge (14), the further support section (17') being supported on the flange (4) by a further spacer (18') extending towards the flange (4).

11. The fastening arrangement according to claim 10, wherein the further spacer (18') supported on the flange (4) in direction perpendicular to the further support section (17') comprises a smaller dimension than the spacer (18) in direction perpendicular to the support section (17) to provide thickness compensation for the flange (4).

12. The fastening arrangement according to one of the claims 1 to 10, wherein the retainer (11) comprises a disassembly tab (21) which projects beyond the supporting edge (13) and extends therefrom and which protrudes in opposite direction to the insertion direction of the plug-in tab (8) through a disassembly opening (19') in the flat part (1) which merges into the slot (10), so that the retainer (11) can be prestressed by the disassembly tab (21).

13. The fastening arrangement according to one of the preceding claims, wherein a tool passage opening (19) via which the retainer (11) is accessible from a front side (20) of the edge region is assigned to the slot (10).

14. The fastening arrangement according to claim 13, wherein the tool passage opening (19) merges into the slot (10).

15. The fastening arrangement according to one of the preceding claims, wherein the body (3) is a wall-mounted cooling device and the flat part (1) is a wall element of a switch cabinet or a switch cabinet door.

## Revendications

1. Dispositif de fixation avec une partie plate (1), qui comprend une découpe (2) et avec un corps (3), qui comprend, sur sa circonférence, au moins à certains endroits, une bride (4), avec laquelle le corps (3) s'appuie, par l'intermédiaire d'un élément d'étanchéité (5) comprimable élastiquement au bord de la découpe (2), la bride (4) étant comprimée par une attache de fixation (6) en comprimant l'élément d'étanchéité (5) sont le bord, l'attache de fixation (6) comprenant une barrette (7), qui s'appuie contre la bride (48), et une patte d'enfichage (8) s'étendant globalement perpendiculairement à celle-ci, **caractérisé en ce que** la patte d'enfichage (8) traverse, avec son extrémité libre (9), une fente (10) au bord, et la patte d'enfichage (8) comprenant au moins un contre-support (11) qui s'appuie contre la partie arrière (12), opposée à la bride (4), du bord.

2. Dispositif de fixation selon la revendication 1, dans lequel l'au moins un contre-support (11) comprend une arête d'appui (13) par l'intermédiaire de laquelle le contre-support (11) s'appuie contre la partie arrière (12), opposée à la bride (4) du bord.

3. Dispositif de fixation selon la revendication 2, dans lequel l'arête d'appui (13) est disposée à une première distance de la barrette (7), qui est la somme d'une épaisseur de la bride (4), d'une épaisseur de la partie plate (1) au bord de la découpe (2) et d'une première épaisseur de l'élément d'étanchéité (5) comprimable élastiquement, lorsque l'élément d'étanchéité (5) se trouve dans un premier état de compression.

4. Dispositif de fixation selon la revendication 2 ou 3, dans lequel l'attache de fixation (6) est une pièce en tôle formée dans laquelle la barrette (7) et la patte d'enfichage (8) sont des portions de tôle reliées entre elles par un rebord, le contre-support (11) étant une patte de tôle pouvant être précontrainte mécaniquement, qui est fixée par l'intermédiaire d'une première extrémité (15) dans une découpe (16) dans la patte d'enfichage (8) et l'extrémité opposée à la première extrémité (15) formant l'arête d'appui (13).

5. Dispositif de fixation selon la revendication 4, dans lequel la patte de tôle dépasse, dans un état non sollicité, hors du plan formé par la patte d'enfichage (8) et se trouve, dans un état précontraint, dans le plan formé par la patte d'enfichage (8), l'arête d'appui (13) de la patte de tôle étant orientée en direction du rebord (14) lorsque la patte de tôle se trouve dans l'état précontraint.

6. Dispositif de fixation selon l'une des revendications 3 à 5, dans lequel la patte d'enfichage (8) comprend au moins un contre-support supplémentaire (11) avec une arête d'appui supplémentaire (13), l'arête d'appui (13) étant disposée à une deuxième distance, différente de la première distance, de la barrette (7), qui est la somme de l'épaisseur de la bride (4), de l'épaisseur de la partie plate (1) au bord de la découpe (2) et d'une deuxième épaisseur de l'élément d'étanchéité comprimable élastiquement (5) lorsque l'élément d'étanchéité (5) se trouve dans un deuxième état de compression.

7. Dispositif de fixation selon l'une des revendications précédentes, dans lequel l'élément d'étanchéité comprimable élastiquement (5) est un joint d'étanchéité en mousse de polyuréthane.

8. Dispositif de fixation selon l'une des revendications précédentes, dans lequel la fente (10) est disposée à une distance de la bride (4) et la barrette (7) dépasse, avec une portion d'appui (17), pouvant être précontrainte élastiquement, de la bride (4) et est appuyée sur le bord de la découpe (2) avec une précontrainte mécanique.

9. Dispositif de fixation selon la revendication 8, dans lequel la portion d'appui (17) comprend, à une distance (d) par rapport au rebord (14) reliant la patte d'enfichage (8) à la barrette (7), une entretoise (18) qui s'étend vers le bord et par l'intermédiaire de laquelle la portion d'appui (17) s'appuie sur le bord, de façon à ce que la patte d'enfichage (8) soit maintenue dans un état précontraint par le contre-support (11) dans la fente (10).

10. Dispositif de fixation selon la revendication 9, dans lequel la barrette (7) comprend une portion d'appui supplémentaire (17') à une deuxième distance (e) du rebord (14), les portions d'appui (17, 17') s'étendant dans des directions opposées à partir du rebord (14) et la portion d'appui supplémentaire (17') s'appuyant, par l'intermédiaire d'une entretoise supplémentaire (18'), qui s'étend vers la bride (4), sur la bride (4).

11. Dispositif de fixation selon la revendication 10, dans lequel l'entretoise supplémentaire (18') appuyée sur la bride (4) comprend, dans une direction perpendiculaire à la portion d'appui supplémentaire (17'), une dimension inférieure à la l'entretoise (18) dans une direction perpendiculaire à la portion d'appui (17), afin de permettre une compensation d'épaisseur pour la bride (4).

12. Dispositif de fixation selon l'une des revendications 1 à 10, dans lequel le contre-support (11) comprend une patte de démontage (21) dépassant au-delà de l'arête d'appui (13) et s'étendant à partir de celle-ci, qui dépasse, dans une direction opposée à la direction d'insertion de la patte d'enfichage (8), à travers une ouverture de démontage (19') dans la partie plate (1), qui conduit vers la fente (10), de façon à ce que le contre-support (11) puisse être précontrainte par l'intermédiaire de la patte de démontage (21).

13. Dispositif de fixation selon l'une des revendications précédentes, dans lequel, à la fente (10), correspond une ouverture de passage d'outil (19) par l'intermédiaire de laquelle le contre-support (11) est accessible à partir du côté avant (20) du bord.

14. Dispositif de fixation selon la revendication 13, dans lequel l'ouverture de passage d'outil (19) conduit vers la fente (10).

15. Dispositif de fixation selon l'une des revendications précédentes, dans lequel le corps (3) est un appareil de refroidissement mural et la partie plate (1) est élément de paroi d'une armoire de commande ou une porte d'armoire de commande.
